# EUROPEAN PATENT APPLICATION

(11) **EP 0 940 441 A1**
(43) Date of publication of application: **08.09.1999**
(21) Application number: 99301617.9
(22) Date of filing: 03.03.1999
(51) Int. Cl.: C08L 55/02, C08L 73/00

(54) **A vinyl aromatic/ketone polymer composition**

(30) Priority: 06.03.1998 US 36117
(71) Applicant: GENERAL ELECTRIC COMPANY, Schenectady, NY 12345 (US)
(72) Inventor: De Wit, Gerrit, 4641 RX Ossendrecht (NL); Lohmeijer, Johannes Hubertus, 4631 HC Hoogerheide (NL)
(74) Representative: Szary, Anne Catherine, Dr.

(57) **Abstract**

A vinyl aromatic composition having improved properties consisting of in combination a vinyl aromatic polymer and a ketone polymer. The vinyl aromatic polymer is a moldable polymer preferably an acrylonitrile-butadiene-styrene polymer and the ketone polymer is a polymer of a carbon monoxide and at least one unsaturated compound. The amount of vinyl aromatic resin is slightly greater than 50 weight % to about 99.5 weight % and, correspondingly, a ketone polymer of about 0,5 weight % to slightly less than about 50 weight % wherein the weight % is based on the total weight of the vinyl aromatic polymer and ketone polymer. The improved properties obtained were better heat performance and elongation over the vinyl aromatic polymer alone.

## Description

This invention relates to particular polymer compositions and more particularly to compositions of a vinyl aromatic polymer such as acrylonitrile-butadiene-styrene (hereinafter ABS) with less than major amounts of a ketone polymer.

For some applications, standard ABS grades lack the required heat performance or resistance to certain chemicals. These standard grades are thermoplastic moldable types of ABS, such as injection molding. Also, well known higher heat resistant grades of ABS based on α-methyl styrene - coacrylonitrile are available but unfortunately they lack good chemical resistance.

Another grade of polymers based on carbon monoxide and one or more olefins have excellent chemical resistance and can be semicrystalline with a melting point of up to 250°c. The class of polymers of carbon monoxide and olefins has been known for some time. U.S. Pat. No. 2,495,286 (Brubaker) disclosed such polymers of relatively low carbon monoxide content in the presence of free radical initiators, e.g., peroxy compounds. Great Britain Patent 1,081,304 discloses similar polymers of higher carbon monoxide content in the presence of alkylphosphine complexes of palladium compounds as catalyst. U.S. Pat. No. 3,694,412 (Nozaki) extended the reactions to produce linear alternating polymers in the presence of arylphosphine complexes of palladium moieties and certain inert solvents.

More recently, the class of linear alternating polvmers of carbon monoxide and at least one ethylenically unsaturated hydrocarbon, now known as polyketones or ketone polymers, has become of greater interest. U.S. Pat. No. 4,880,903 (VanBroekhoven, et al.) discloses a linear alternating ketone terpolymer of carbon monoxide, ethylene, and other olefinically unsaturated hydrocarbons, such as propylene. Processes for production of the polyketones typically involve the use of a catalyst composition formed from a compound of a Group VIII metal selected from palladium, cobalt or nickel, the anion of a strong non-hydrohalogenic acid and a bidentate ligand of phosphorus, arsenic or antimony. U.S. Pat. No. 4,843,144 (VanBroekhoven, et al.) discloses a process for preparing polymers of carbon monoxide and at least one ethylenically unsaturated hydrocarbon using the preferred catalyst comprising a compound of palladium, the anion of a non-hydrohalogenic acid having a pKa of below about 6 and a bidentate ligand of phosphorus. U.S. Patents 4,880,903 and U.S. Patent 4,843,144 are hereby incorporated by reference.

The resulting polymers are relatively high molecular weight materials having established utility as premium thermoplastics in the production of shaped articles, such as containers for food and drink and parts for the automotive industry, which are produced by processing the ketone polymer according to well known methods.

This family of polymers is called polyketones. The polyketone is, generally, semi-crystalline with a melting point in the range of about 170 to about 250°C; depending on the polyketone olefinic monomer ratio. In the melt, the polyketone exhibits rheological behavior typical for a linear entangled flexible chain. Therefore, these polyketones are suitable for use in a broad range of processes and equipment which have been developed for conventional thermoplastics.

The prior art reference of U.S. 5,369,180 refers to a miscible blend of a polvketone and a copolymer of vinyl-aromatic (styrene, 1-methyl styrene) and acrylonitrile-monomer with 45-80 wt % of acrylonitrile.

European patent EP-530894 discloses a blend of a polyketone and a styrene -acrylonitrile containing 45-80 wt. % of acrylonitrile.

U.S. 4900789 discloses a composition of a polyketone and 0.5 - 50 wt. % of an ABS which has less than about 35 wt. % butadiene.

U.S. 4956412 refers to a non-miscible blend of a polyketone and 0.5 to 35 wt. % of styrene-acrylonitrile having less than 40 wt. % of acrylonitrile.

U.S. 5162432 refers to a composition of a polyketone and 15 - 30 wt. % of a high rubber graft copolymer.

EP451918 discloses a composition of a polyketone, a high rubber graft copolymer of less than 50 wt. % of a rigid graft copolymer of vinylnitrile, vinylnitrile plus vinyl and optionally acrylics, and mixtures thereof on greater than 50 wt. % of a preformed rubbery substrate.

### SUMMARY OF THE INVENTION

The present invention is directed to a novel composition comprising in admixture a moldable vinyl aromatic polymer and a ketone polymer wherein the ketone polymer is present in less than major amounts. It has been surprisingly discovered that minor amounts of a ketone polymer added to an vinyl aromatic moldable grade polymer significantly increased the chemical resistance, elongation and heat performance over that of ABS alone. The amount of ketone polymer in combination with the ABS is that amount that increases the properties of the ABS/ketone polymer combination over that of the ABS alone. Preferably, the amount of ketone polymer employed herein is about 0.5 to less than 50 wt. % based on the total weight of the ABS and ketone polymer. The blend of ABS and ketone polymer can be prepared by blending and heating the composition into a melt processable blend. The composition can then be processed into useful articles by such processes as extrusion into sheets, films, plates, and shaped parts, injection molding, compression molding, vacuum forming, extrusion blow molding and the like. The ketone polymers employed herein may be either alternating or random type polymers, and are preferably alternating. The vinyl aromatic polymer employed herein is a moldable grade which is sometimes referred to as rigid ABS.

### DESCRIPTION OF THE INVENTION

This invention compnses in combination, a vinyl aromatic polymer and a ketone polymer in sufficient amounts to increase properties over that of the vinyl aromatic polymer alone. Preferably, the composition of this invention comprises about 0.5 to slightly less than 50 weight % of the ketone polymer based on the weight of the combination of the vinyl aromatic polymer and ketone polymer. Particularly, the composition of the invention comprises about 0.5 to about 49.5 weight % of the ketone polymer, and more particularly about 0.5 to about 40 weight % of the ketone polymer. The balance of the combination is the vinyl aromatic resin which can range from slightly greater than 50 weight % to about 99.5 weight %, particularly from about 50.5 weight % to about 99.5 weight %, and more particularly about 60 to about 99.5 weight % of the vinyl aromatic polymer.

The vinyl aromatic polymers or resins of this invention comprise (a) a rubber modified monovinylidene aromatic graft copolvmer and (b) an ungrafted rigid copolymer, and are generally prepared by graft polymerization of a mixture of a monovinylidene aromatic monomer and one or more comonomers in the presence of one or more rubbery polymeric substrates. Depending on the amount of rubber present, a separate matrix or continuous rigid phase of ungrafted rigid (co)polymer may be simultaneously obtained along with the rubber modified monovinylidene aromatic graft polymer. The resins may also be produced by blending a rigid monovinylidene aromatic copolymer with one or more rubber modified monovinylidene aromatic graft copolymers. Typically, the rubber modified resins comprise the rubber modified graft copolymer at a level of from 5 to 50 percent by weight based on the total weight of the resin, preferably from 10 to 45 percent by weight thereof, more preferably 15 to 45 percent by weight thereof, and most preferably from 15 to 40 percent by weight thereof; and the rubber modified resin comprises the ungrafted rigid polvmer at a level of from 50 to 95 percent by weight based on the total weight of the resin, preferably from 55 to 90 percent by weight thereof, more preferably from 55 to 85 percent by weight thereof.

Monovinylidene aromatic monomers which may be employed include styrene, α-methyl styrene, halostyrenes i.e. dibromostyrene, mono or di alkyl, alkoxy or hydroxy substitute group on the nuclear ring of the monovinylidene aromatic monomer i.e. vinyl toluene, vinylxylene, butylstyrene, parahydroxystyrene or methoxystyrene or mixtures thereof. The monovinylidene aromatic monomers utilized are generically described by the following formula: 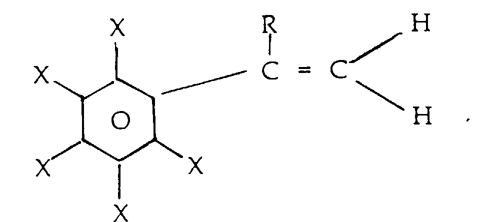 wherein x is selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chorine. Examples of substituted vinylaromatic compounds include styrene, 4-methlystyrene, 3,5-diethylstyrene, 4-n-propyl-styrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are stvrene and/or α-methylstyrene.

Comonomers which may be used with the monovinylidene aromatic monomer includes acrylonitrile, methacrylonitrile, C1 to C8 alkyl or aryl substituted acrylate, C1 to C8 alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth) acrylates or mixtures thereof. The acrylonitrile, substituted acrylonitrile, or acrylic acid esters are described generically by the following formula: 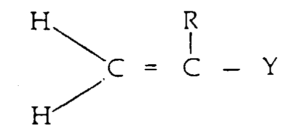 wherein R is as previously defined and Y is selected from the group consisting of cyano and carbalkoxy groups wherein the alkoxy group of the carbalkoxy contains from one to about twelve carbon atoms. Examples of such monomers include acrylonitrile, ethacrylonitrile, methacrylonitrile, α-chloroacrylonitrile, α-bromoacrylonitrie, methyl acrylate, methyl methacrylate, ethyl acrylate, butyl acrylate, propylacrylate, isopropyl acrylate and mixtures thereof. The preferred monomer is acrylonitrile and the preferred acrylic acid esters are ethyl acrylate and methyl methacrylate. It is also preferred that the acrylic acid esters, when included, are employed in combination with styrene or acrylonitrile.

The rubber modified graft copolymer preferably comprises (i) the rubber substrate, and (ii) a rigid polymeric superstrate portion grafted to the rubber substrate The rubber substrate is preferably present in the graft copolymer at a level of from 5 to 50 percent by weight based on the total weight of the graft copolymer, more preferably from 10 to 45 percent by weight thereof, and most preferably 15 to 40 percent by weight thereof, and the rigid superstrate is preferably present at a level of from 50 to 95 percent by weight based on the total weight of the graft copolymer, more preferably from 55 to 90 percent by weight thereof, and most preferably from 60 to 85 percent by weight thereof.

For mass polymerization, the rubber level ranges from 4 to 40 percent by weight based on the total weight of the rubber modified resin. For blends of an ungrafted rigid copolymer (such as styrene-acrylonitrile copolvmer) with an emulsion high rubber graft (HRG) copolymer (such as acrylonitrile-butadiene-stvrene graft copolymers), the rubber loading will typically range from 10 to 40 percent rubber based on the total weight of the rubber modified resin.

Examples of rubbery polymers for the substrate include: conjugated dienes, copolymers of a diene with styrene, acrylonitrile, methacrylonitrile or C1 to C8 alkyl acrylate which contain at least 50% (preferably at least 65% by weight) conjugated dienes, polyisoprene or mixtures thereof; olefin rubbers i.e. ethylene propylene copolymers (EPR) or ethylene propylene non-conjugated diene copolymers (EPDM); silicone rubbers; or C1 to C8 alkyl acrylate homopolymers or copolymers with butadiene and/or styrene. The acrylic polymer may also contain up to 5% of one or more polyfunctional crosslinking agents such as alkylenediol di(meth)acrylates, alkylenetriol tri(meth)acrylates, polyester di(meth) acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of C1 to C6-alkylacrylate which are produced by aqueous radical emulsion polymerization. The acrylate rubbers may be cross-linked, particulate emulsion copolymers substantially of C1 to C8-alkylacrylate, in particular C1 to C6-alkylacrylate, optionally in admixture with up to 15% by weight of comonomers such as styrene, methylmethacrylate, butadiene, vinyl methyl ether or acryloni-trile and optionally up to 5% by weight of a polyfunctional crosslinking comonomer, e. g. Divinyl-benzene, glycol-bis-acrylates, bisacrylamides, phosphoric acid triallylester, citric acid triallyl-ester, allylesters or acrylic acid or methacrylic acid, triallylcyanurate, triallylisocyanurate. Also suitable are mixtures of diene- and alkylacrylate rubbers and rubbers which have a so-called core-shell structure, e.g. a core of diene rubber and a shell of acrylate or vice versa.

Specific conjugated diene monomers normally utilized in preparing the rubber substrate of the graft polymer are generically described by the following formula: 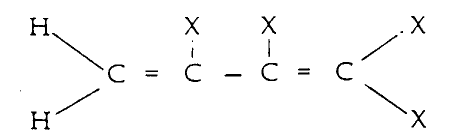 wherein X is selected from the group consisting of hydrogen, alkyl groups containing from one to five carbon atoms, chorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1, 3 butadiene.

The substrate polymer, as mentioned, is preferably a conjugated diene polymer such as polybutadiene, polyisoprene, or a copolymer, such a s butadiene-styrene, butadiene-acrylonitrile, or the like. The rubbery polymeric substrate portion must exhibit a glass transition temperature (Tg) of less than about 0°C.

Mixtures of one or more rubbery polymers previously described for preparing the monovinylidene aromatic graft polymers, or mixtures of one or more rubber modified monovinylidene aromatic graft polymers disclosed herein may also be employed. Furthermore, the rubber may comprise either a block or random copolymer. The rubber particle size used in this invention as measured by simple light transmission methods or capillary hydrodynamic chromatography (CHDF) may be described as having an average particle size by weight of 0.05 to 10 microns, preferably 0.6 to 1.5 microns, for mass polymerized rubber substrates which also have included grafted monomer occlusions. The rubber substrate is preferably a particulate, moderately crosslinked diene or alkyl acrylate rubber, and preferably has a gel content greater than 70%.

Preferred graft superstrates include copolymers of styrene and acrylonitrile, copolymers of α-methylstyrene and acrylonitrile and methylmethacrylate polymers or copolymers with up to 50% by weight of C1 to C6 alkylacrylates, acrylonitrile or styrene. Specific examples of monovinylidene aromatic graft copolymers include but are not limited to the following: acrylonitrile-butadiene-styrene (ABS), acrylonitrile-styrene-butyl acrylate (ASA), methylmethacrylate-acrylonitrile-butadiene styrene (MABS), acrylonitrie-ethylene-propylene-non-conjugated diene-styrene (AES).

The ungrafted rigid polymers (typically free of rubber) are resinous, thermoplastic polymers of styrene, α-methylstyrene, styrenes substituted in the nucleus such as para-methylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, α-methylstyrene/acrylonitrile copolymers and ethylmethacrylate/acrylonitrile copolymers are preferred.

The ungrafted rigid copolymers are known and may be prepared by radical polymerization, in particular by emulsion, suspension, solution or bulk polymerization. They preferably have number average molecular weights of from 20,000 to 200,000 and limiting viscosity numbers η of from 20 to 110 ml/g (determined in dimethylformamide at 25°C).

The number average molecular weight of the grafted rigid superstrate of the monovinylidene aromatic resin is designed to be in the range of 20,000 to 350,000. The ratio of monovinylidene aromatic monomer to the second and optionally third monomer may range from 90/10 to 50/50 preferably 30/20 to 60/40. The third monomer may optionally replace 0 to 50 percent of one or both of the first and second monomers.

These rubber modified monovinylidene aromatic graft polymers may be polymerized either by mass, emulsion, suspension, solution or combined processes such as bulk-suspension, emulsion-bulk, bulk-solution or other techniques well known in the art. Furthermore, these rubber modified monovinylidene aromatic graft copolymers may be produced either by continuous, semibatch or batch processes.

The ketone polymers (hereinafter referred to polyketones) of this invention preferably comprise an alternating structure which contain substantially one molecule of carbon monoxide for each molecule of unsaturated hydrocarbon. Suitable unsaturated compounds for use as precursors of the ketone polymers are hydrocarbons having up to 20 carbon atoms inclusive, preferably up to 10 carbon atoms, and are aliphatic such as ethylene and other olefins including propylene, 1-butene, isobutylene, 1-octene and 1-dodecene, or are arylaliphatic, cycloaliphatic or olefinic compounds with other functional groups such as unsaturated compounds containing an aryl substituent or an acrylo-,acetate and the like. Illustrative of these latter classes of unsaturated compounds are styrene, p-methylstyrene, p-ethylstyrene or m-isopropylstyrene, acrylonitrile, methyl methacrylate and the like. The preferred ketone polymers are copolymers of carbon monoxide and ethylene or terpolymers of carbon monoxide, ethylene and a second ethylenically unsaturated hydrocarbon of at least 3 carbon atoms, particularly an α-olefin such as propylene.

Of particular interest are the polyketones of number average molecular weight from about 1000 to about 200,000, particularly those of number average molecular weight from about 20,000 to about 90,000 as determined by gel permeation chromatography. The physical properties of the polymer will depend in part upon the molecular weight, whether the polymer is a copolymer or a terpolymer and, in the case of the terpolymers, the nature and the proportion of the second unsaturated compounds present. Typical melting points for the polymers are from about 175°C to about 280°C., more typically from about 180°C. to about 260°C. The polymers have a limiting viscosity number (LVN), measured in m-cresol at 60°C. in a standard capillary viscosity measuring device, from about 0.3 dl/ g to about 10 dl/ g, more frequently from about 0.5 dl/ g to about 2 dl/ g.

A method for the production of the polyketones is illustrated by U.S. Patent No. 4,843,144 (Van Broekhoven, et al.) which has been incorporated herein by reference.

The compositions of the invention may also include other additives such an antioxidants, dyes, fillers or reinforcing agents, fire resistant materials, mold release agents, colorants, polymers, impact modifiers, other stabilizers, and other materials designed to improve the processability of the polymers or the properties of the resulting blend. Specific other additives that can be added to the composition include, but are not limited hereto, aluminum trioxide, aluminum hydroxylates, zinc aluminate, hydroxy apatite, zinc aluminate, cupric chromite, mercapto-benzimidazole, aromatic amines (one or two ring amines), aluminum phenoxide, tri-acetyl acetonate, aluminum stearate, zinc-oxide, zinc sulfide, trialkylphosphite, zinc salt of an acidic polymer, hydroxy apatite, carbonated hydroxy apatite, mixture of hydroxy apatite and zinc aluminate, mixture of hydroxy apatite and aluminum hydroxide, mixture of magnesium oxide and titanium dioxide, tri-alkoxide compounds with hydroxy apatite, phenolic compounds, decyl alcohol, and 2-ethyl-1-hexanol. Such additives are added prior to, together with, or subsequent to the blending of the vinyl aromatic resin and the polyketone. The presence of these additives may affect the optimum level of the components of this invention for a given application.

The composition which is extrusion melt blended can be further processed by methods such as extrusion into sheets, films, plates and shaped parts, injection molding, blow molding, vacuum forming, compression molding and the like. The compositions of the invention are particularly useful for the production of articles by multiple melting/crystallization cycles, and where elevated temperatures are likely to be encountered. Illustrative of such applications are the production of articles useful in both rigid and flexible packaging applications, such as containers and films, and in both internal and external parts for automotive use; fibers, useful yarns, tire cord, and fabric; and coatings for a variety of materials.

### DETAILED DESCRIPTION OF THE EXAMPLES OF THIS INVENTION

This invention can be further described by means of the following examples. It should be understood, however, that this invention shall in no way be restricted by these examples. Where amounts are in terms of percent, they are percent by weight unless otherwise stated.

The ingredients and test procedures employed in the examples are as follows:

| | |
|---|---|
| Pk | an ethylene, propylene, carbon monoxide terpolymer with a TM of 220°C and an intrinsic viscosity (IV) of about 0.85 as measured in m-cresol at 60°C. |
| ABS-1 | an acrylonitrile-butadiene-styrene (ABS) having a ratio of 25/ 29/46 respectively of A/B/S. |
| ABS-2 | an ABS having an A/B/S α-methylstyrene ratio of 26/14/8.5/51.5 respectively. |
| SAN | bulk styrene-acrylonitrile (SAN) having an S/AN ratio of 73/27 respectively. |
| ABS-3 | an ABS having an A/B/S ratio of 15/50/35 respectively. |
| Vicat B (120°c) | test procedure ISO-306 |
| INI at 23°c (kJ/m²) | notched Izod impact test procedure ISO-180 |
| Tensile strength (MPa) | test procedure ISO-527 |
| Tensile Modulus (MPa) | test procedure ISO-527 |
| Elongation at break | test procedure ISO-527 |
| Elongation at break after chemical resistance test | test procedure ISO-527 |
| Chemical resistance test | tensile bars were placed in a jig which provides 0.7% strain. The bars are treated in the middle with a few drops of bornyl-acetate and remained under strain for 1 hour. |

### Example 1

All the formulations set forth in Table 1 were made by dry blending the ingredients followed by compounding the ingredients in a PRISM 16TSE corotating extruder. The temperature settings were graduated from the feed hopper to the die orifice from about 190°c to about 230°c with a screw speed of about 300 rpm. No vacuum was used. The extrudate through the die orifice was pelletized and the pellets were dried at about 85°c for four hours. The compounded ingredients were molded employing a 35 ton molding machine with graduated temperatures from the feed hopper to the injection nozzle of about 210°c to about 230°c and a mold temperature of about 60°c.

The formulations are set both in TABLE 1.

**TABLE 1**

| Ingredients | 1 | 2 | 3 | 4 | 5 | 6 |
|---|---|---|---|---|---|---|
| PK | | 20 | 30 | 40 | | |
| ABS-1 | 100 | 80 | 70 | 60 | | |
| ABS-2 | | | | | 35 | 75 |
| SAN | | | | | 45 | 16 |
| ABS-3 | | | | | 20 | 9 |
| TiO₂ | 6 | 6 | 6 | 6 | 6 | 6 |
| Additives | 1.7 | 1.7 | 1.7 | 1.7 | 1.7 | 1.7 |
| Ti O₂: titanium dioxide pigment | | | | | | |
| Additives: stabilizers and antioxidants | | | | | | |

### EXAMPLE 2

The molded samples from Example 1 were then tested for various properties with the test results obtained set forth in TABLE 2.

**TABLE 2**

| Property | 1 | 2 | 3 | 4 | 5 | 6 |
|---|---|---|---|---|---|---|
| Vicat B (°c) | 98 | 99 | 102 | 106 | 102 | 105 |
| INI (k J/m²) | 28.5 | 24.6 | 14.6 | 8.6 | 19.1 | not measured |
| Tensile strength (MPa) | 35.5 | 37.0 | 36.5 | 36.9 | 38.7 | 38.9 |
| Tensile Modulus (MPa) | 1780 | 1840 | 1840 | 1830 | 2330 | 2270 |
| Elongation at break (%) | 7 | 12 | 35 | 36 | 11 | 9 |
| Elongation at break after chemical resistance test after 4 days (%) | 7 | 12 | 35 | 36 | failed* | failed* |

| | | | | | | |
|---|---|---|---|---|---|---|
| * failed during the strain period (1 hour) | | | | | | |

The results obtained clearly demonstrates the improved properties of the composition of this invention namely formulations 2, 3 and 4 as compared to reference formulations 1, 5 and 6. The addition of less than major amounts of polyketone (PK) produced better properties Vicat of B, elongation at break and elongation at break after exposure to chemical resistance test than ABS alone.

While variations of this invention will be suggested to those skilled in the art, in view of the above disclosures, it is understood that they fall within the scope of the claims appended hereto.

## Claims

1. A moldable vinyl aromatic polymer composition comprising in combination (1) a vinyl aromatic resin comprising (a) a rubber modified monovinylidene aromatic graft copolymer, and (b) an ungrafted rigid copolymer and (2) a sufficient amount of a ketone polymer, said vinyl aromatic composition having improved properties of heat performance and elongation.

2. The composition of claim 1 wherein the vinyl aromatic composition comprises about 0.5 to an amount of slightly less than 50 weight % of the ketone polymer based on the total weight of the vinyl aromatic resin and ketone polymer.

3. The composition of claim 2 wherein the ketone polymer is present in an amount of about 0.5 to about 49.5 weight %.

4. The composition of claim 2 wherein the ketone polymer is present in an amount about 0.5 to about 40 weight %.

5. The composition of claim 1 wherein the vinyl aromatic resin is the residue of the graft polymerization of a mixture of a monovinylidene aromatic monomer and at least one commoner in the presence of at least one rubbery polymeric substrate.

6. The composition of claim 5 wherein the vinyl aromatic polymer is a moldable acrylonitrile-butadiene-styrene polymer.

7. The composition of any preceding claim wherein the ketone polymer is a polymer of carbon monoxide and at least one unsaturated compound, preferably an olefin.

8. The composition of claim 7 wherein the ketone polymer is a terpolymer of ethylene, propylene and carbon monoxide and has a melting temperature of up to 250°C.

9. The composition of claim 5 wherein the vinyl aromatic polymer is a rigid copolymer of styrene and acrylonitrile grafted onto a butadiene rubbery substrate.

10. The composition of claim 9 wherein the styrene is α-methyl styrene.
